Europäisches Patentamt

(19) European Patent Office

Office européen des brevets

(11) Numéro de publication: **0 071 552**
**B1**

(12) **FASCICULE DE BREVET EUROPEEN**

(45) Date de publication du fascicule du brevet:
29.05.85

(51) Int. Cl.⁴: **F 16 K  5/06**, F 16 K  35/10

(21) Numéro de dépôt: 82420107.3

(22) Date de dépôt: 28.07.82

(54) **Robinet à boisseau sphérique.**

(30) Priorité: 31.07.81 FR 8115240

(43) Date de publication de la demande:
09.02.83 Bulletin 83/6

(45) Mention de la délivrance du brevet:
29.05.85 Bulletin 85/22

(84) Etats contractants désignés:
AT BE CH DE GB IT LI LU NL SE

(56) Documents cités:
FR - A - 2 428 774
US - A - 3 554 218

(73) Titulaire: "RIBAT" Société à Responsabilité Limitée, 5
Rue des Ateliers Z.I. de Seynod, F-74600 Annecy (FR)

(72) Inventeur: Chappaz, Jean André, 45 Avenue Gambetta,
F-74000 Annecy (FR)

(74) Mandataire: Monnier, Guy et al, Cabinet
Monnier 142-150 Cours Lafayette, F-69003 Lyon (FR)

## Description

La présente invention est relative à un robinet à boisseau sphérique correspondant au préambule de la revendication, connu du FR-A-2 428 774.

L'invention a pour but de permettre la réalisation d'un dispositif particulièrement bien adapté à la distribution de l'eau à partir d'un réseau d'alimentation, lequel dispositif est de par sa construction à l'abri de toute manipulation non autorisée.

L'invention, telle qu'elle est caractérisée dans la revendication, résout ce problème.

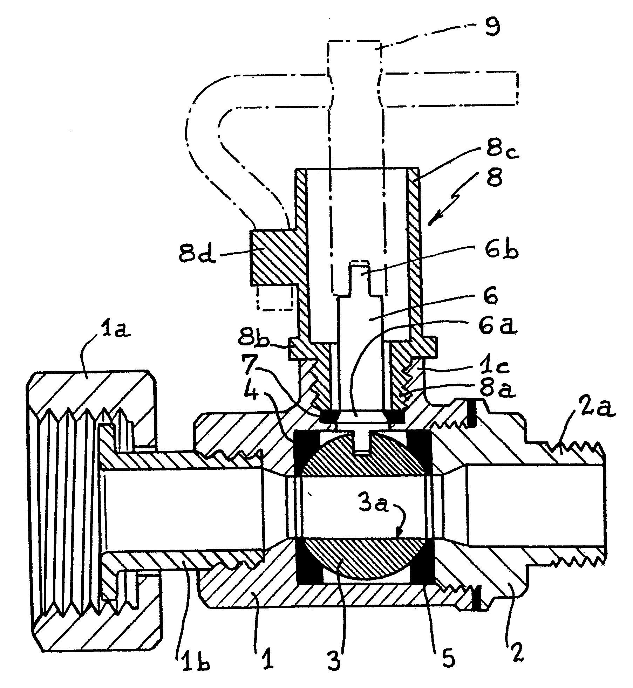

Le dessin annexé, donné à titre d'exemple, permettra de mieux comprendre l'invention, les caractéristiques qu'elle présente et les avantages qu'elle est susceptible de procurer:

La figure unique de ce dessin est une coupe axiale schématique d'un robinet établi conformément à l'invention.

Le corps du robinet représénté est formé par l'assemblage étanche de deux pièces tubulaires 1 et 2, agencées au niveau de leur extrémité libre pour permettre leur fixation sur la canalisation considérée; on a supposé que la pièce 2 était pourvue d'un embout fileté 2a tandis que la pièce 1 était équipée d'un écrou tournant 1a prisonnier sur un manchon 1b vissé dans le débouché fileté de ladite pièce.

1. Cette dernière renferme un boisseau sphérique 3 percé d'un alésage débouchant 3a, l'étanchéité de la rotation de ce boisseau 3 est assurée, à la façon en soi connue, par deux sièges latéraux 4 et 5 maintenus au contact dudit boisseau 3 par l'extrémité intérieure de la pièce 2.

Le déplacement angulaire du boisseau 3 est commandé par une tige verticale 6 dont l'extrémité inférieure, profilée à la manière d'un tournevis, est engagée dans une empreinte correspondante ménagée dans la face en vis-à-vis dudit boisseau. La retenue axiale de cette tige 6 est opérée par un joint 7 qui s'oppose à toute fuite le long de ladite tige et qui est associé à un presse-étoupe 8.

Conformément à l'invention ce presse-étoupe 8 comporte un embout fileté 8a vissé dans une partie tubulaire 1c de la pièce 1 du corps 1—2; cet embout 8a prend appui contre le joint 7 qui est ainsi fermement appliqué contre une portée tronconique 6a de la tige 6. Au-dessus de l'embout 8a le presse-étoupe 8 présente une bride annulaire 8b établie à un profil en forme de six pans de façon à pouvoir coopérer avec un outil de serrage; cette bride 8b est elle-même surmontée d'une partie tubulaire 8c en forme de manchon, qui entoure et surmonte l'extrémité libre 6b de la tige 6.

On comprend que la partie tubulaire ou manchon 8c du presse-étoupe 8 forme cache pour l'extrémité 6b de la tige de commande 6, si bien que cette dernière ne peut être manoeuvrée que par le détenteur d'une clef démontable 9 susceptible d'être engagée axialement par le haut dans ce manchon 8c et dont la base est profilée pour coopérer avec l'extrémité 6b. Il convient par contre d'observer que si une personne non autorisée tente d'accéder à cette extrémité 6b moyennant démontage de la partie apparente 8b—8c du presse étoupe 8, une fuite de liquide survient dès le début du dévissage de celui-ci, étant noté que ce dévissage peut même provoquer, sous l'effet de la pression, l'expulsion brusque du presse-étoupe 8 et du joint 7.

Dans la forme de réalisation illustrée, l'on a supposé que la barre transversale de la clef démontable 9 était coudée pour venir porter contre un bossage 8d prévu latéralement sur la manchon 8c du presse-étoupe 8 afin d'assurer le positionnement correct du boisseau 3 aux positions ouverte et fermée, mais cette disposition n'a évidemment rien d'obligatoire.

## Revendication

Robinet à boisseau sphérique, du genre dans lequel le boisseau (3) est déplacé angulairement à l'aide d'une tige (6) mobile associée d'une part à un organe de manoeuvre (9) démontable et d'autre part à un ensemble joint d'étanchéité (7) et presse-étoupe (8), le presse-étoupe (8) présentant une bride annulaire (8b) et un embout fileté (8a) à visser dans une partie tubulaire (1c) du corps (1) du robinet, caractérisé en ce que la bride (8b) du presse-étoupe (8) est surmontée d'une partie tubulaire en forme de manchon (8c) qui dépasse au-delà de l'extrémité libre (6b) de la tige (6) pour éviter toute manipulation de celle-ci par des personnes ne disposant pas de l'organe démontable de manoeuvre (9), tandis que toute tentative de démontage du presse-étoupe pour avoir accès à l'extrémité libre (6b) de la tige se traduit par une fuite au niveau du joint (7) d'étanchéité de la tige.

## Pantentanspruch

Kugelhahn von der Beschaffenheit, bei welcher der Hahnkegel (3) mittels eines einerseits mit einem abnehmbar vorgesehenen Betätigungsorgan (9), andererseits mit einem aus Dichtungsring (7) und Stopfbüchse (8) bestehenden Aufbau verbundenen beweglichen Schaftes (6) winkelförmig verschoben wird, wobei die Stopfbüchse (8) einen ringförmigen Flansch (8b) und einen auf einen röhrenförmigen Teil (1c) des Hahngehäuses (1) schraubbaren Einsatz mit Außengewinde (8a) aufweist, dadurch gekennzeichnet, daß der ringförmige Flansch (8b) von einem röhrenförmigen Teil in der Form einer Muffe (8c) überdeckt wird, der die freie Spitze (6b) des Schaftes (6) überragt, um jegliche Bedienung des Hahnes durch Personen, welche nicht über das abnehmbare Bedienungsorgan (9) verfügen, zu verhindern, während jeder Versuch einer Abmontierung der Stopfbüchse (8), um einen Zugang zur freien Spitze (6b) des obenerwähnten Schaftes zu erhalten, ein Ausfließen in der Höhe des Dichtungsringes (7) des genannten Schaftes (6) zur Folge hat.

**Claims**

Ball valve of the type in which the plug (3) is displaced angularly with the aid of a mobile rod (6) associated on the one hand with a manoeuvring member (9) provided to be dismountable and on the other hand with an O-ring (7) packing (8) assembly, said packing (8) presenting an annular flange (8b) and a threaded end piece (8a) adapted to screw in a tubular part (1c) of the body (1) of the valve, characterized in that the annular flange (8b) is surmounted by a sleeveshaped tubular part (8c) which projects beyond the free end (6b) of the rod (6) in order to avoid any manipulation of the latter by persons not having the dismountable manoeuvring member (9), whilst any attempt to dismantle the packing (8) to have access to the free end (6b) of the rod mentioned above is translated by a leak at the level of the O-ring (7) of said rod (6).